# FASCICULE DE BREVET EUROPEEN

(11) **EP 0 860 095 B1**
(45) Date de publication et mention de la délivrance du brevet: **20.09.2000**
(21) Numéro de dépôt: 96934968.7
(22) Date de dépôt: 25.10.1996
(51) Int. Cl.: H04R 17/00, H04M 1/274

(54) **PROCEDE DE FABRICATION D'UN TRANSDUCTEUR SONORE INTEGRE DANS UNE CARTE A PRODUCTION DE SIGNAUX ACOUSTIQUES**
HERSTELLUNGSVERFAHREN FÜR EINEN INTEGRIERTEN SCHALLWANDLER IN EINER KARTE ZUR ERZEUGUNG VON AKUSTISCHEN SIGNALEN
METHOD FOR MAKING A SOUND TRANSDUCER INTEGRATED INTO AN ACOUSTIC SIGNAL GENERATING CARD

(30) Priorité: 26.10.1995 FR 9512660
(43) Date de publication de la demande: 26.08.1998
(73) Titulaire: GEMPLUS S.C.A., 13881 Gémenos Cédex (FR)
(72) Inventeur: MARTIN, Philippe, F-21200 Beaune (FR)
(86) Numéro de dépôt international: FR9601667
(87) Numéro de publication internationale: WO9716049

(56) Documents cités:
- EP-A- 0 209 791
- EP-A- 0 664 633
- WO-A-94/17562
- GB-A- 2 263 999
- US-A- 5 293 035

## Description

L'invention se rapporte à un transducteur sonore et plus particulièrement à son procédé de fabrication et à son intégration dans une carte à production de signaux acoustiques de faible épaisseur.

Une telle carte permet de transférer, vers un serveur par exemple, des informations confidentielles, de manière sécurisée, par l'intermédiaire d'une ligne téléphonique.

Les signaux acoustiques sont produits selon le principe de codage de données par un couple de fréquences de 697 à 1633 Hz et sont plus connus sous l'appellation anglo-saxonne Dual Tone Modulation Frequency (DTMF). En téléphonie, ces signaux DTMF sont utilisés pour la numérotation, la transmission de codes etc.

On sait fabriquer, aujourd'hui, des transducteurs sonores en céramique sur une épaisseur de l'ordre de 0,3mm, en vue de les insérer dans des cartes de faible épaisseur, c'est-à-dire d'environ 0,8mm conformément à la demande EP 0 664 633 A1. Cependant, de tels transducteurs en céramique sont très coûteux et augmentent notablement le prix de revient des cartes.

D'autres matériaux sont par conséquent à l'étude, en vue de réaliser des transducteurs sonores à faible coût. En particulier, il a déjà été envisagé d'utiliser un matériau en polyvinylidène fluoré (PVDF). Le PVDF est en effet un matériau avantageux car il est peu cher et il permet, en outre, de conserver les différences d'amplitudes qui existent entre les deux fréquences définissant les signaux DTMF.

Pourtant, jusqu'à présent il s'est avéré impossible de réaliser un transducteur en PVDF de très faible épaisseur en vue de l'insérer dans une carte au format classique, d'épaisseur environ égale à 0,8 mm. En effet, les transducteurs sonores en PVDF, fabriqués actuellement, comportent chacun deux films de PVDF, électriquement reliés et placés sous contrainte. Ces films sont logés dans un cadre dont l'épaisseur est comprise entre 0,8 et lmm. Chaque transducteur ainsi réalisé forme une pièce unitaire qu'il faut ensuite fixer dans une carte en effectuant des reprises de contacts à l'aide de fils conducteurs.

Le montage d'un tel transducteur dans une carte impose par conséquent un travail minutieux, fastidieux et long. En outre, la carte possède une épaisseur trop élevée, supérieure à l'épaisseur normalisée des cartes à puce, puisqu'elle est comprise entre 1,5 et 2mm. Enfin, le transducteur sonore est fragile puisqu'il ne peut résister à des contraintes dues à des torsions de la carte dans laquelle il est inséré.

La présente invention permet de palier tous ces inconvénients puisqu'elle propose un procédé de fabrication d'un transducteur sonore en PVDF et d'intégration de celui-ci dans une carte réalisée au format classique des cartes à puces, selon la norme ISO 78.16-12, avec une faible épaisseur d'environ 0,8mm. Cette carte permet de produire des signaux acoustiques transmissibles par voie téléphonique. Elle supporte, sur la surface arrière, un motif d'interconnexions. Le procédé selon l'invention est plus particulièrement caractérisé en ce qu'il consiste à :
- effectuer des bandes de métallisations double-face, définissant des électrodes, réparties sur toute la largeur d'un ruban en PVDF de grande longueur et de très faible épaisseur,
- découper chaque bande de métallisations en film unitaire de grande longueur,
- fixer une portion de film sur un emplacement prédéfini du motif d'interconnexions -de la surface arrière de la carte et supprimer l'excédent de film, et
- placer la portion de film sous contrainte, de manière à ce qu'elle puisse émettre des signaux acoustiques lorsqu'une tension lui est appliquée.

Un autre objet de l'invention concerne un transducteur sonore en PVDF intégré dans une carte à production de signaux acoustiques transmissibles par voie téléphonique, dont la surface arrière supporte un motif d'interconnexions, caractérisé en ce qu'il comprend :
- des rainures parallèles les unes aux autres supportées par la surface arrière de la carte,
- une portion de film en PVDF, de très faible épaisseur, supportant deux électrodes, inférieure et supérieure, connectées au motif d'interconnexions de la carte, et
- une pièce de contrainte dont la face inférieure comporte des crans parallèles entre-eux, aptes à se positionner en regard des rainures et à appuyer sur la portion de film pour lui conférer une forme crénelée.

Le transducteur sonore selon la présente invention est réalisé au sein de la carte à production de signaux DTMF. Par conséquent, le transducteur ne se présente plus sous la forme d'une pièce unitaire insérée dans la carte mais il fait partie intégrante de la carte. Pour cette raison, sa résistance mécanique aux contraintes, dues à des torsions de la carte par exemple, est grandement améliorée. De plus, l'intégration du transducteur dans la carte se fait très simplement, par collage.

D'autres particularités et avantages de l'invention apparaîtront à la lecture de la description faite à titre d'exemple illustratif et non limitatif, en référence aux figures annexées qui représentent :
- la figure 1, un organigramme illustrant les étapes d'un procédé selon l'invention,
- la figure 2, des bandes de métallisations sur un ruban de grande longueur,
- les figures 3A à 3E, des schémas d'une carte de faible épaisseur au cours de l'intégration d'un transducteur sonore selon l'invention,
- la figure 4, un schéma en coupe A-A du transducteur sonore de la figure 3D.

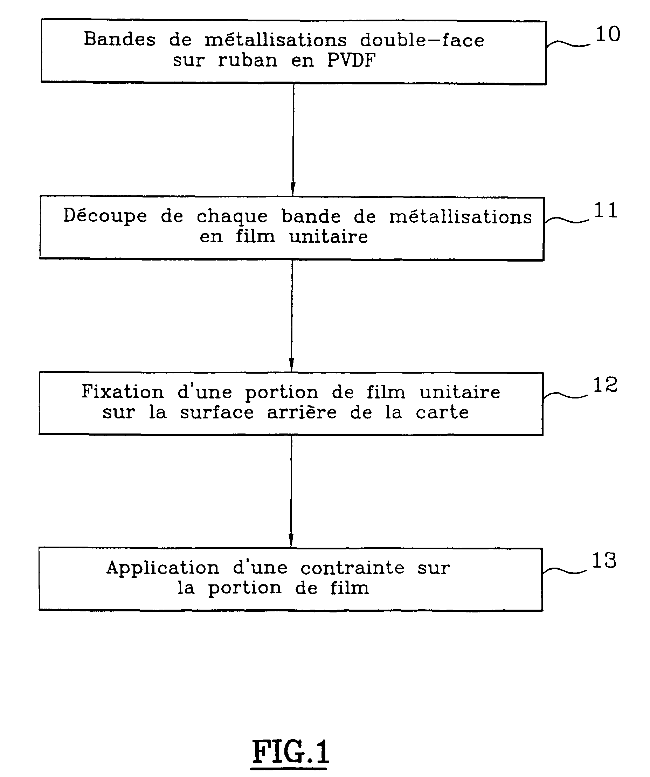

Un mode de réalisation d'un procédé selon l'invention est résumé dans l'organigramme de la figure 1. Un tel procédé consiste, dans une première étape 10, à effectuer des bandes de métallisations double-face sur un ruban en PVDF de grande longueur et de très faible épaisseur. Ces bandes de métallisations sont réparties sur toute la largeur du ruban et leur largeur correspond à celle du transducteur à réaliser. La manière dont ces métallisations sont effectuées est expliquée dans ce qui suit. A l'étape suivante 11, chaque bande de métallisations est découpée pour former un film unitaire de grande longueur entièrement métallisé sur ses deux faces inférieure et supérieure. Les métallisations définissent ainsi deux électrodes inférieure et supérieure sur le film unitaire. En parallèle avec les étapes 10 et 11, des composants électroniques passifs et actifs sont fixés et câblés sur la surface arrière d'une carte. Ensuite, à l'étape 12, une portion du film unitaire est fixée sur la surface arrière de cette carte, et plus précisément ses deux électrodes sont connectées à un motif d'interconnexions réalisé sur cette surface arrière. La fixation de la portion de film est décrite dans ce- qui suit. Enfin, la dernière étape 13 consiste à contraindre la portion du film, de manière à ce qu'elle puisse émettre des signaux acoustiques lorsqu'une tension lui est appliquée.

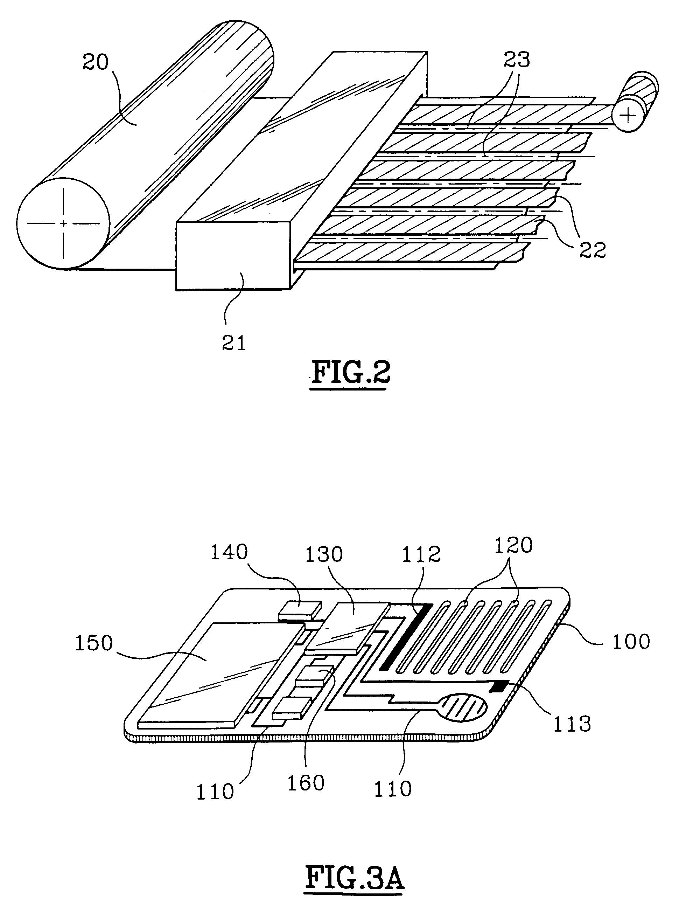

Toutes ces étapes de procédé seront mieux comprises au regard des figures 2 à 4.

La figure 2 illustre un mode de réalisation des bandes de métallisations 22 sur un ruban 20 de grande longueur et de très faible épaisseur. Le ruban 20 est en polyvinylidène fluoré (PVDF) et se présente sous la forme d'un rouleau. De manière avantageuse, les dipôles moléculaires du PVDF ont préalablement été orientés, de façon permanente, selon un procédé bien connu de l'homme du métier. Le rouleau est progressivement déroulé et entraîné, à vitesse constante, dans une chambre de dépôt 21.

Les bandes de métallisations 22 sont alors réalisées sur les faces inférieure et supérieure du ruban, par un procédé d'évaporation par exemple, dans la chambre 21.

Pour pouvoir réaliser des bandes uniformes, de largeur constante, des masques, non représentés sur la figure 2, sont placés dans la chambre d'évaporation 21. Les petites bandes non métallisées restantes, de largeur identique à celles des masques placés dans la chambre d'évaporation, c'est-à-dire de largeur environ égale à 10mm, définissent, de manière avantageuse, des axes de découpe 23. Ces axes de découpe 23 permettent de découper chaque bande de métallisations 22 en un film unitaire de grande longueur et de très faible épaisseur, comprise entre 9 et 12 µm.

De plus, les axes de découpe 23, non métallisés, sont suffisamment larges pour éviter toute formation de court-circuit latéral, entre les deux faces métallisées d'une bande, pendant la découpe.

Les figures 3A à 3E illustrent les étapes de finition d'un transducteur réalisé selon le procédé de la figure 1 et, plus particulièrement, elles illustrent la manière dont un tel transducteur est intégré dans une carte de faible épaisseur. Ainsi, la figure 3A représente la surface arrière 100 d'une carte à production de signaux acoustiques. La face supérieure de cette surface arrière 100 supporte un motif d'interconnexions 110 sur lequel sont fixés des composants électroniques nécessaires au fonctionnement de la carte, à savoir : un micromodule 140, un circuit 130 de production de signaux acoustiques, un résonateur 160, une pile 150 et d'autres composants passifs. Ces composants électroniques sont fixés par collage par exemple, au moyen d'un adhésif conducteur anisotrope.

En outre, des rainures 120 sont pratiquées sur la surface arrière 100, à l'emplacement du transducteur sonore. Ces rainures sont orientées parallèlement les unes aux autres, dans le sens de la largeur de la carte, par exemple, et sont pratiquées entre deux points de contacts 112, 113 du motif d'interconnexions 110. Ces deux points de contacts 112, 113 sont prévus pour la connexion des électrodes inférieure et supérieure d'une portion d'un film unitaire tel que précédemment décrit. La largeur de chaque rainure est de préférence comprise entre 2 mm et 3 mm pour un transducteur de longueur comprise entre 27 et 35mm. De plus, la profondeur de chaque rainure est de l'ordre de 0,19 mm pour une surface arrière d'épaisseur environ égale à 0,2mm. Selon une variante de réalisation, les rainures peuvent également être orientées dans le sens de la longueur de la carte, parallèlement les unes aux autres. Dans ce cas, la fabrication du transducteur intégré selon l'invention est identique, il y a simplement une rotation de 90° par rapport à ce qui est décrit. La surface arrière 100 est de préférence réalisée dans une matière présentant une bonne rigide mécanique telle que du verre époxy par exemple.

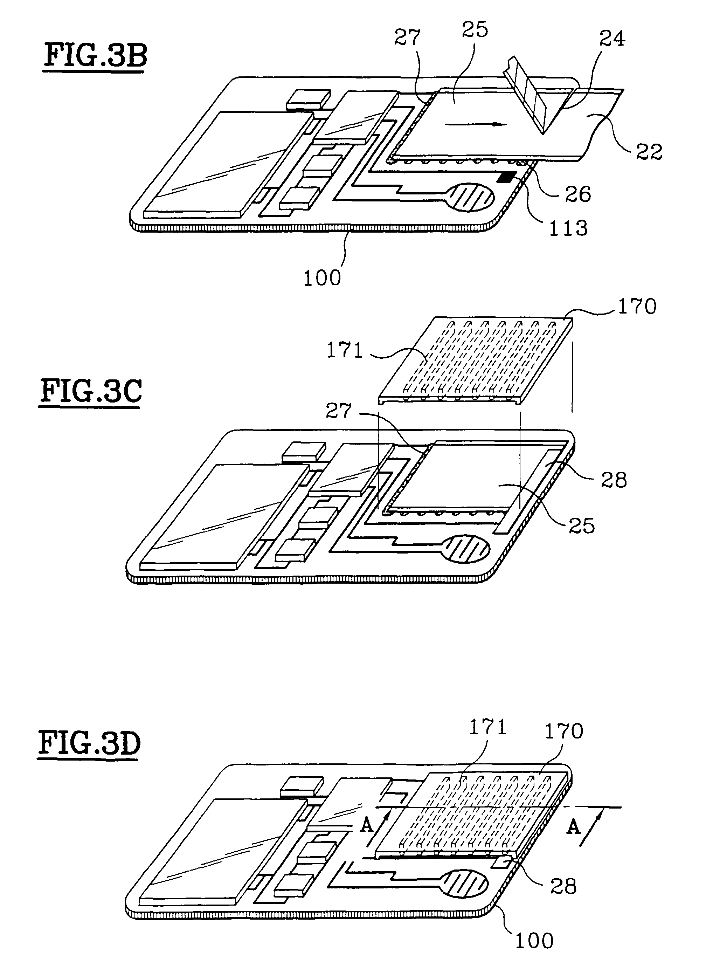

Le film unitaire 22 en PVDF, métallisé sur ses deux faces, est ensuite placé sur son emplacement, de manière à recouvrir les rainures 120, tel que représenté sur la figure 3B. Pour cela, le film unitaire est préalablement tendu, puis collé, à une première extrémité de son emplacement, sur un premier point de contact 112 du motif d'interconnexions 110. Le collage est réalisé au moyen d'un adhésif conducteur anisotrope 27 afin de relier électriquement l'électrode inférieure du film 22 au point de contact 112. Le film est d'autre part collé sur la surface arrière 100 de la carte, à une deuxième extrémité de son emplacement, à l'aide d'une simple colle 26 de type classique. Le film 22 est alors découpé le long d'un axe de découpe 24, de manière à supprimer l'excédent de film et à ne garder qu'une portion de film 25 fixée, à ses deux extrémités, sur la surface arrière 100 de la carte.

Des précautions doivent cependant être prises, lors de la découpe du film, pour éviter d'éventuels court-circuits latéraux susceptibles de se former entre les deux électrodes inférieure et supérieure de la portion de film 25. Ces précautions consistent notamment à procéder à une découpe très lente, sans appuyer sur la portion de film 25.

De préférence, la portion de film 25, métallisée sur ses deux faces, est fixée sur la surface arrière 100, de telle sorte que ses dipôles moléculaires soient orientés parallèlement au côté longitudinal de la surface arrière 100 de la carte.

En outre, l'épaisseur de cette portion de film 25 est très faible puisqu'elle est avantageusement comprise entre 9 et 12 µm.

Dans une étape suivante, illustrée sur la figure 3C, une deuxième liaison électrique est réalisée entre la portion de film unitaire 25 et le motif d'interconnexions 110. En effet, l'électrode supérieure de la portion de film 25 est réunie au deuxième point de contact 113, du motif d'interconnexions 110, situé à proximité de la deuxième extrémité de la portion de film. Pour cela, une lame métallique 28 est fixée, sur l'électrode supérieure de la portion de film 25 et sur le deuxième point de contact 113, au moyen d'un adhésif conducteur anisotrope.

La portion de film 25 ayant été fixée sur la surface arrière de la carte, il faut alors la placer sous contrainte de manière à ce qu'elle puisse émettre des signaux sonores lorsqu'une tension lui est appliquée. Une pièce de contrainte 170, de forme rectangulaire, apte à recouvrir toute la surface de la portion de film 25, est alors réalisée.

De manière avantageuse des crans 171 sont pratiqués sur la face inférieure de la pièce de contrainte 170. Ces crans 171 sont parallèles entre-eux et orientés dans le sens de la largeur de la pièce 170. Ainsi, lors de la mise en place de la pièce de contrainte 170, les crans 171 viennent se positionner en regard des rainures 120 de la surface arrière 100 et exercent une pression sur la portion de film 25 de manière à lui conférer une forme crénelée.

Du fait que les dipôles moléculaires du PVDF soient orientés, la réponse de la portion de film 25 devient anisotropique lorsque celle-ci est placée sous contrainte. Pour cela, il est important de fixer la portion de film 25 de telle sorte que ses dipôles moléculaires soient orientés perpendiculairement aux rainures 120. C'est en effet lorsque la contrainte est appliquée perpendiculairement à l'orientation des dipôles moléculaires de PVDF, que le transducteur sonore réalisé selon la présente invention fonctionne le mieux. C'est pourquoi, étant donné que les rainures 120 sont pratiquées dans le sens de la largeur de la carte, la portion de film 25 est fixée de telle sorte que ses dipôles moléculaires soient orientés parallèlement au côté longitudinal de la carte. Dans la variante décrite précédemment, lorsque les rainures sont pratiquées dans le sens de la longueur de la carte, il suffit donc de tourner la portion de film 25 et la pièce de contrainte 170 de 90°.

De préférence, le transducteur ainsi réalisé, et représenté dans son intégralité sur la figure 3D, se présente sous une forme rectangulaire, de largeur comprise entre 25 et 30 mm et de longueur comprise entre 27 et 35mm.

De plus, lors de la mise en fonctionnement du transducteur, un autre problème s'est posé puisque, d'après l'enseignement théorique reçu de l'art antérieur, il aurait fallu appliquer une tension d'une centaine de volts aux bornes d'un transducteur selon la présente invention, pour obtenir une réponse similaire à celle d'un transducteur classique en céramique aux bornes duquel une tension de trois à six volts est appliquée. Or, de manière surprenante, il a cependant été constaté qu'une tension de douze volts appliquée aux bornes du transducteur, réalisé selon la présente invention, permet d'obtenir une réponse correcte.

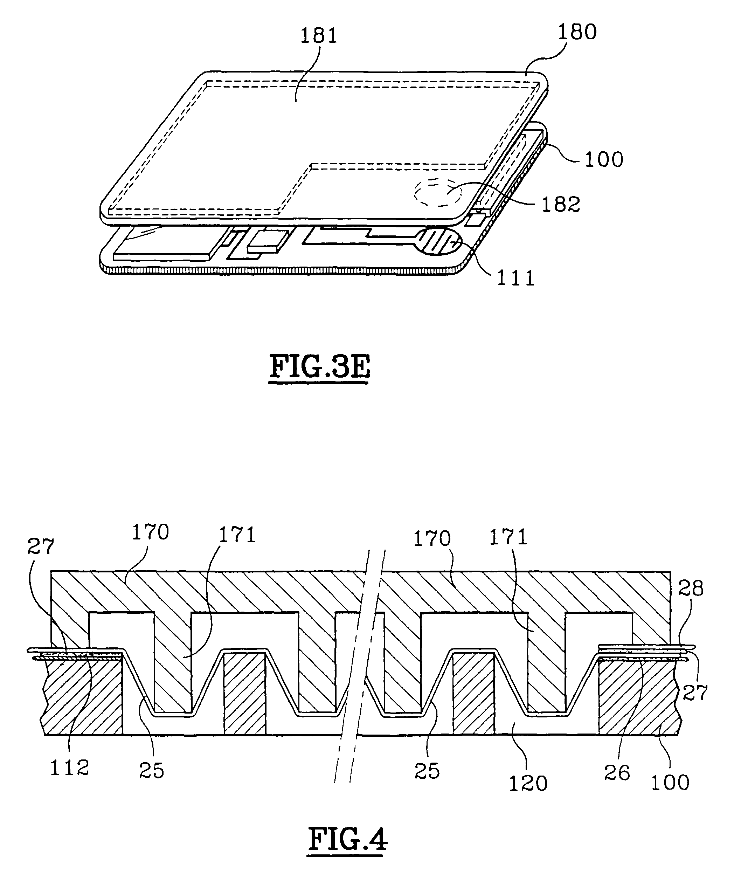

La surface arrière 100 de la carte est ensuite recouverte par une surface avant 180, tel qu'illustré sur la figure 3E, dans la face inférieure de laquelle est pratiquée une grande cavité 181 apte à encadrer les composants électroniques fixés sur la surface arrière. En outre une touche, non représentée sur la figure 3E, placée dans une cavité 182 de la surface avant 180, permet d'actionner un système de déclenchement du circuit 130 de production de signaux acoustiques. Cette touche permet en effet de court-circuiter des points de contacts 111 réalisés sous forme de traits interdigités, appartenant au motif d'interconnexions 110, de manière à établir un contact apte à déclencher le circuit 130.

Selon une variante il est possible de réaliser la pièce de contrainte directement sur la face inférieure de la surface avant 180. Ainsi, elle fait partie intégrante de la surface avant de la carte. De plus, ceci permet de réduire encore l'épaisseur de la carte.

La figure 4 représente un schéma en coupe A-A du transducteur sonore de la figure 3D. La surface arrière 100 est représentée en hachuré. Les rainures 120 possèdent une profondeur de l'ordre de 0,19 mm et une largeur comprise entre 2 et 3 mm. A une première extrémité, à gauche sur la figure 4, l'électrode inférieure de la portion de film 25 en PVDF est électriquement reliée au premier point de contact 112 du motif d'interconnexions au moyen d'un adhésif conducteur anisotrope 27. A une deuxième extrémité, à droite sur la figure 4, l'électrode inférieure de la portion de film 25 est fixée sur la surface arrière 100 par collage à l'aide d'une simple colle 26, et l'électrode supérieure est électriquement reliée au deuxième point de contact 113 du motif d'interconnexions, non représenté sur la figure 4, par l'intermédiaire d'une lame métallique 28 fixée par collage, au moyen d'un adhésif conducteur anisotrope 27.

La pièce de contrainte 170 munie de ses crans 171 possède une épaisseur de préférence comprise entre 0,3 et 0,4 mm. Les crans 171 sont placés en vis-à-vis des rainures 120 pratiquées sur la surface arrière 100, et appuient sur la portion de film 25 de manière à lui conférer une forme crénelée. De plus, les rainures 120 forment, de manière avantageuse, des sortes de petites cavités dans lesquelles la portion de film de PVDF, placée sous contrainte, peut vibrer lorsqu'une tension lui est appliquée.

Selon une variante de réalisation, il est en outre possible de pratiquer des trous débouchants, non représentés sur la figure 4, répartis de manière régulière le long des rainures 120 de la surface arrière 100 de manière à ce qu'ils facilitent l'émission des signaux acoustiques.

## Revendications

1. Procédé de fabrication d'une carte de faible épaisseur ayant un transducteur sonore en film de polyvinylidène fluoré (PVDF) apte à fournir des signaux acoustiques transmissibles par voie téléphonique, un motif d'interconnexions étant réalisé sur la surface arrière de ladite carte, caractérisée en ce qu'elle consiste à :
- réaliser des rainures (120) parallèles les unes aux autres sur la surface arrière (100) de la carte, entre deux points de contact (112, 113) prévus pour la connexion des électrodes inférieure et supérieure d'une portion de film (25),
- effectuer des bandes de métallisations double-face (22), définissant des électrodes, réparties sur toute la largeur d'un ruban (20) en PVDF de grande longueur et de très faible épaisseur,
- découper chaque bande de métallisations (22) en film unitaire de grande longeur,
- fixer une portion de film (25) sur un emplacement prédéfini du motif d'interconnexions (110) de la surface arrière de la carte et supprimer l'excédent de film, puis,
- placer la portion de film (25) sous contrainte, de manière à ce qu'elle puisse émettre des signaux acoustiques lorsqu'une tension lui est appliquée.

2. Procédé selon la revendication 1, caractérisé en ce que la fixation de la portion de film (25) sur le motif d'interconnexions (110) de la surface arrière (100) consiste, dans un premier temps, à coller l'électrode inférieure de la portion de film, à une première extrémité, sur un premier point de contact (112) du motif d'interconnexions (110) au moyen d'un adhésif conducteur anisotrope (27) de manière à réaliser une première liaison électrique et, à une deuxième extrémité, sur la surface arrière au moyen d'une simple colle (26) ; puis dans un deuxième temps, à réaliser une deuxième liaison électrique, à la deuxième extrémité, entre l'électrode supérieure de la portion de film (25) et un deuxième point de contact (113) du motif d'interconnexions (110), en fixant une lame métallique (28) au moyen d'un adhésif conducteur anisotrope (27).

3. Procédé selon l'une des revendications 1 à 2 caractérisé en ce que la portion de film (25) est fixée sur la surface arrière (100) de la carte de telle sorte que ses dipôles moléculaires soient orientés perpendiculairement aux rainures (120).

4. Procédé selon l'une des revendications 1 à 3, caractérisé en ce qu'il consiste à réaliser une pièce de contrainte (170) de forme rectangulaire munie, sur sa face inférieure, de crans (171) parallèles entre-eux aptes à se positionner en regard des rainures (120) de la surface arrière (100) ; et à placer cette pièce en appui sur la portion de film (25), de manière à lui conférer une forme crénelée.

5. Procédé selon l'une des revendications 1 à 4, caractérisé en ce qu'il consiste à appliquer une tension de 12 volts aux bornes de la portion de film (25) placée sous contrainte, de manière à ce qu'elle émette des signaux acoustiques.

6. Procédé selon l'une des revendications 1 à 5 caractérisé en ce qu'il consiste en outre à effectuer des trous débouchants répartis le long des rainures (120) de la surface arrière (100), de manière à ce qu'ils facilitent l'émission des signaux acoustiques.

7. Carte de faible épaisseur ayant un transducteur sonore en film de polyvinylidène fluoré (PVDF) apte à fournir des signaux acoustiques transmissibles par voie téléphonique, un motif d'interconnexions étant réalisé sur la surface arrière de ladite carte, caractérisée en ce qu'elle comprend :
- des rainures (120) parallèles les unes aux autres supportées par la surface arrière (100) de la carte,
- une portion de film (25) en PVDF, de très faible épaisseur, supportant deux électrodes inférieure et supérieure, qui sont connectées au motif d'interconnexions (110) de la carte, et
- une pièce de contrainte (170) dont la face inférieure comporte des crans (171) parallèles entre-eux, aptes à se positionner en regard des rainures (120) et à appuyer sur la portion de film (25) pour lui conférer une forme crénelée.

8. Carte selon la revendication 7, caractérisée en ce que l'épaisseur de la portion de film (25) est comprise entre 9 et 12 µm.

9. Carte selon l'une des revendications 7 à 8, caractérisée en ce que le transducteur est de forme rectangulaire, de largeur comprise entre 25 et 30 mm et de longueur comprise entre 27 et 35 mm.

10. Carte selon l'une des revendications 7 à 9, caractérisée en ce que les rainures (120) présentent une profondeur de l'ordre de 0,19 mm.

11. Carte selon l'une des revendications 7 à 10, caractérisée en ce que l'épaisseur de la pièce de contrainte (170) munie de ses crans (171) est comprise entre 0,3 et 0,4 mm.

12. Carte selon l'une des revendications 7 à 11 caractérisée en ce que la pièce de contrainte (170) fait partie intégrante de la surface avant (180) de la carte.

## Patentansprüche

1. Verfahren zur Herstellung einer Karte geringer Dicke, welche einen Schall-Transducer aus einem Polyvinylidenfluorid-Film (PVDF) hat, der in der Lage ist akustische Signale bereitzustellen, die auf telefonischem Wege übertragbar sind, wobei ein Verbindungsmuster auf der Rückseite der Karte verwirklicht ist, dadurch gekennzeichnet, dass es umfasst:
- Verwirklichung von zueinander parallelen Nuten (120) auf der Rückseite (100) der Karte, zwischen zwei Kontaktpunkten (112, 113), die vorgesehen sind zur Verbindung von Elektroden, die unterhalb und oberhalb eines Filmabschnitts (25) sind,
- Verwirklichung von doppelseitigen Metallisierungsbändern (22), welche die Elektroden definieren, welche verteilt sind auf der gesamten Breite eines PVDF-Streifens (20) von großer Länge und sehr geringer Dicke,
- Abschneiden jedes Metallisierungsbandes (22) als Einzelfilm großer Länge,
- Befestigung eines Filmabschnitts (25) an einem vordefinierten Ort des Verbindungsmusters (110) der Rückseite der Karte und Entfernung des Filmüberschusses, danach
- Einspannen des Filmabschnitts (25) auf solche Weise, dass er akustische Signale abgeben kann, wenn eine Spannung an ihn angelegt wird.

2. Verfahren nach Anspruch 1, dadurch gekennzeichnet, dass die Befestigung des Filmabschnitts (25) auf dem Verbindungsmuster (110) der Rückseite (100) darin besteht zunächst die untere Elektrode des Filmabschnitts an einem ersten Ende auf einen ersten Kontaktpunkt (112) des Verbindungsmusters (110) zu kleben, mittels eines anisotrop leitfähigen Klebemittels (27) zur Verwirklichung einer ersten elektrischen Verbindung, und an einem zweiten Ende auf die Rückseite mittels eines einfachen Klebers (26) ; dann danach eine zweite elektrische Verbindung am zweiten Ende zu verwirklichen, zwischen der oberen Elektrode des Filmabschnitts (25) und einem zweiten Kontaktpunkt (113) des Verbindungsmusters (110), durch Befestigung einer metallischen Klinge (28) mittels eines anisotrop leitfähigen Klebemittels (27).

3. Verfahren nach einem der Ansprüche 1 oder 2, dadurch gekennzeichnet, dass der Filmabschnitt (25) auf solche Weise auf der Rückseite (100) der Karte befestigt ist, dass seine molekularen Dipole senkrecht zu den Nuten (120) orientiert sind.

4. Verfahren nach einem der Ansprüche 1 bis 3 dadurch gekennzeichnet, dass es umfasst ein Einspannstück (170) von rechteckiger Form zu verwirklichen, das auf seiner unteren Seite mit zueinander parallelen Einkerbungen (171) ausgestattet ist, die geeignet sind sich bezüglich der Nuten (120) der Rückseite (100) zu positionieren; und dieses Stück mit Druck auf den Filmabschnitt (25) zu platzieren, um ihm eine gerippte Form zu verleihen.

5. Verfahren nach einem der Ansprüche 1 bis 4, dadurch gekennzeichnet dass es umfasst eine Spannung von 12 Volt an die Anschlüsse des eingespannten Filmabschnitts (25) anzulegen, damit dieser akustische Signale aussendet.

6. Verfahren nach einem der Ansprüche 1 bis 5, dadurch gekennzeichnet, dass es außerdem umfasst Durchgangslöcher zu verwirklichen, die entlang der Nuten (120) der Rückseite (100) verteilt sind, auf solche Weise, dass diese das Aussenden der akustischen Signale vereinfachen.

7. Karte geringer Dicke mit einem Schall-Transducer aus Polyvinylidenfluorid-Film (PVDF), der in der Lage ist, akustische Signale bereitzustellen, die auf telefonischem Wege übertragbar sind, wobei ein Verbindungsmuster auf der Rückseite der Karte verwirklicht ist, dadurch gekennzeichnet, dass sie umfasst,
- zueinander parallele Nuten (120), welche von der Rückseite (100) der Karte getragen werden,
- einen Filmabschnitt (25) aus PVDF, von sehr geringer Dicke, der eine untere und eine obere Elektrode trägt, welche mit dem Verbindungsmuster (110) der Karte verbunden sind, und
- ein Einspannstück (170), dessen untere Fläche zueinander parallele Einkerbungen (171) umfasst, die geeignet sind sich bezüglich der Nuten (120) zu positionieren und auf den Filmabschnitt (25) zu drücken, um diesem eine gerippte Form zu verleihen.

8. Karte nach Anspruch 7 dadurch gekennzeichnet, dass die Dicke des Filmabschnitts (25) zwischen 9 und 12 µm liegt.

9. Karte nach einem der Ansprüche 7 oder 8, dadurch gekennzeichnet, dass der Transducer rechteckige Form hat, mit einer Breite zwischen 25 und 30mm und einer Länge zwischen 27 und 35mm.

10. Karte nach einem der Ansprüche 7 bis 9, dadurch gekennzeichnet, dass die Nuten (120) eine Tiefe in der Größenordnung von 0,19mm haben.

11. Karte nach einem der Ansprüche 7 bis 10, dadurch gekennzeichnet, dass die Dicke des mit den Einkerbungen (171) ausgestatteten Einspannstücks (170) zwischen 0,3 und 0,4mm liegt.

12. Karte nach einem der Ansprüche 7 bis 11, dadurch gekennzeichnet, dass das Einspannstück (170) einen integralen Teil der Vorderseite (180) der Karte bildet.

## Claims

1. Process to fabricate a card of thin dimension, having a sonic transducer made from fluorinated polyvinylidene film (PVDF) capable of generating acoustic signals transmissible by telephony, an interconnection pattern being applied on the rear side of the said card, characterised in that it consists of
• Making grooves (120) parallel to each other on the rear side (100) of the card, between two contact points (112, 113) provided to connect the lower and upper electrodes of a portion of film (25)
• Making two-sided metallic strips (22), defining electrodes spread over the entire width of a PVDF ribbon (20) of great length and very thin dimension
• Cutting out each metallic strip (22) from a single film of great length
• Fixing a portion of film (25) on a predefined point of the interconnection pattern (110) of the rear of the card and removing the excess film, then
• Placing the portion of film (25) under restraint so that it can emit acoustic signals when voltage is applied

2. Process according to claim 1, characterised in that fixing the portion of film (25) on the interconnection pattern (110) of the rear side (100) consists in a first stage of sticking the lower electrode of the portion of film, at a first end, on a first point of contact (112) of the interconnection pattern (110) by means of an anistropic electrically conducting adhesive (27) in such a way as to make a first electrical connection and, at a second end, on the rear side by means of simple glue (26); then, in a second stage, of making a second electrical connection, at the second end, between the upper electrode of the portion of film (25) and a second point of contact (113) of the interconnection pattern (110), by fixing a metal blade (28) by means of an anistropic electrically conductive adhesive (27)

3. Process according to one of claims 1 & 2,
characterised in that the portion of film (25) is fixed on the rear side (100) of the card so that its molecular dipoles point perpendicularly to the grooves (120)

4. Process according to one of claims 1 to 3,
characterised in that it consists of producing a restraining piece (170) in a rectangular shape equipped on its lower face with notches (171) parallel to each other capable of being positioned opposite the grooves (120) of the rear side (100); and of placing this piece in support on the portion of film (25) so as to give it a notched form

5. Process according to one of claims 1 to 4,
characterised in that it consists of applying a voltage of 12 v to the terminals of the portion of film (25) placed under restraint so that it emits acoustic signals

6. Process according to one of claims 1 to 5,
characterised in that it also consists of making holes opening out spread along the grooves (120) of the rear side (100), so that they assist the emission of the acoustic signals

7. Card of thin dimension, having a sonic transducer made from fluorinated polyvinylidene film (PVDF) capable of generating acoustic signals transmissible by telephony, an interconnection pattern being applied on the rear side of the said card, characterised in that it comprises
• Grooves (120) parallel to each other supported by the rear side (100) of the card,
• A portion of film (25) made from PVDF of very thin dimension, supporting two lower and upper electrodes, which are connected to the interconnection pattern (110) of the card and
• A restraining piece (170) the lower face of which comprises notches (171) parallel to each other capable of being positioned opposite the grooves (120) and leaning on the portion of film (25) to give it a notched form

8. Card according to claim 7, characterised in that the thickness of the portion of film (25) is between 9 and 12 µm

9. Card according to one of claims 7 & 8, characterised in that the transducer has a rectangular shape, with a width of between 25 and 30 mm and length between 27 and 35 mm

10. Card according to one of claims 7 to 9, characterised in that the grooves (120) have a depth in the order of 0.19 mm

11. Card according to one of claims 7 to 10, characterised in that the thickness of the restraining piece (170) equipped with its notches (171) is between 0.3 and 0.4 mm

12. Card according to one of claims 7 to 11, characterised in that the restraining piece (170) is an integral part of the front side (180) of the card
